# EUROPEAN PATENT APPLICATION

(11) **EP 1 612 970 A2**
(43) Date of publication of application: **04.01.2006**
(21) Application number: 05105981.4
(22) Date of filing: 30.06.2005
(51) Int. Cl.: H04B 10/155, H04B 10/08, H01S 5/0683

(54) **Laser apparatus and laser output control apparatus**

(30) Priority: 01.07.2004 KR 2004051186
(71) Applicant: SAMSUNG ELECTRONICS CO., LTD., Suwon-si, Gyeonggi-do 442-742 (KR)
(72) Inventor: Lee, Jong-min, Suwon-si, Gyeonggi-do (KR)
(74) Representative: Geary, Stuart Lloyd

(57) **Abstract**

A laser output control apparatus and method are provided. The laser output control apparatus includes a laser unit including a laser diode and a photo diode having at least one connection structure therebetween; a power controller maintaining power of a laser beam emitted by the laser diode constant in accordance with a feedback voltage applied from the photo diode; and a bias voltage application unit selectively applying a bias voltage to the photo diode according to the connection structure so that the photo diode is biased in a reverse direction. Accordingly, a different bias voltage can be selectively applied to a photo diode according to a connection structure in which a laser diode and the photo diode of a semiconductor laser are connected to each other. Accordingly, it is possible to applicable a semiconductor laser device in office appliance regardless of a connection structure of the semiconductor laser device, thereby allowing versatility of used parts and reducing manufacture costs.

## Description

The present invention relates to a laser apparatus comprising a laser diode, a photo diode and bias means.

A semiconductor laser device can be used in office appliances, such as a laser printer, a laser facsimile, or multi-functional peripherals, as well as optical recording media, such as a Compact Disc Recordable (CD-R), a Compact Disc Rewritable (CD-RW), or a Digital Versatile Disc (DVD). Two semiconductor elements, i.e., a laser diode and a photo diode, are installed in the semiconductor laser device. The laser diode and the photo diode are configured so that they are biased in a forward direction and a reverse direction, respectively. The semiconductor laser used in an optical recording medium generates a laser beam using a continuous wave technique. The connection of the laser diode and the photo diode used in an optical recording medium may be variously configured. For instance, the anode of the laser diode and the cathode of the photo diode are commonly connected to each other, the cathode of the laser diode and the cathode of the photo diode are commonly connected to each other, the cathode of the laser diode and the anode of the photo diode are commonly connected to each other, or the anode of the laser diode and the anode of the photo diode are commonly connected to each other. The semiconductor laser device for an optical recording medium is standardized in that the anode of the laser diode and the cathode of the photo diode, or the cathode of the laser diode and the cathode of the photo diode are commonly connected to each other.

A semiconductor laser device used in office appliances generates a laser beam according to a high-speed on/off switching method using a high-frequency pulse. The semiconductor laser device in this case is configured so that an anode of the laser diode and the cathode of the photo diode are connected to each other as a common electrode. Since only a semiconductor laser device with such a connection is applicable only to office appliances, the versatility of the semiconductor lasers are limited to the specific application for which they are designed. Thus, manufacturing costs are increased.

The present invention provides a laser output control apparatus that is applicable to a semiconductor laser device with at least one connection structure of a laser diode and a photo diode so as to control a laser output thereof.

The present invention relates to a laser apparatus comprising a laser diode, a photo diode and bias means.

A laser apparatus according to the present invention is characterised in that the bias means is operable to bias the photo diode in dependence on the configuration of the laser diode and the photo diode.

Other additional and/or preferred features are set forth in claims 2 and 3 appended hereto.

An embodiment of the present invention will now be described, by way of example only, and with reference to the accompanying drawings, in which:
Figure 1 is a block diagram of a laser output control apparatus according to an exemplary embodiment of the present invention;
Figures 2A and 2B illustrate examples of a connection structure of a laser diode and a photo diode that constitute the laser unit of Figure 1;
Figure 3 is a circuit diagram of a power controller of Figure 1 according to an embodiment of the present invention;
Figure 4 is a circuit diagram of a bias voltage application unit of Figure 1 according to an embodiment of the present invention;
Figure 5 is a block diagram of a second bias voltage generation unit of Figure 4 according to an embodiment of the present invention;
Figure 6 is a detailed circuit diagram of the second bias voltage generation unit of

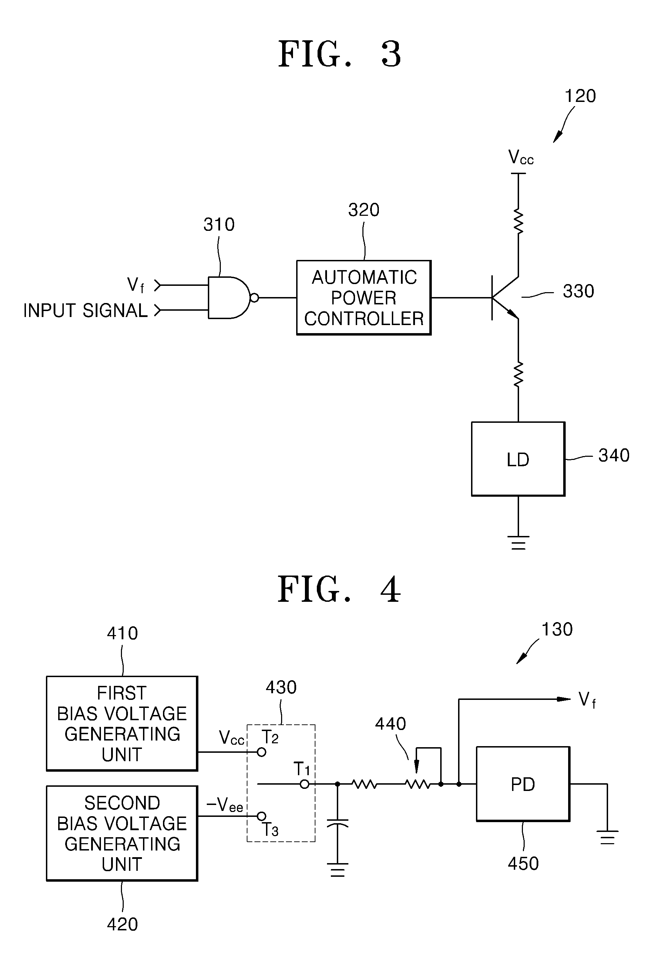

Figure 4 according to an embodiment of the present invention; and

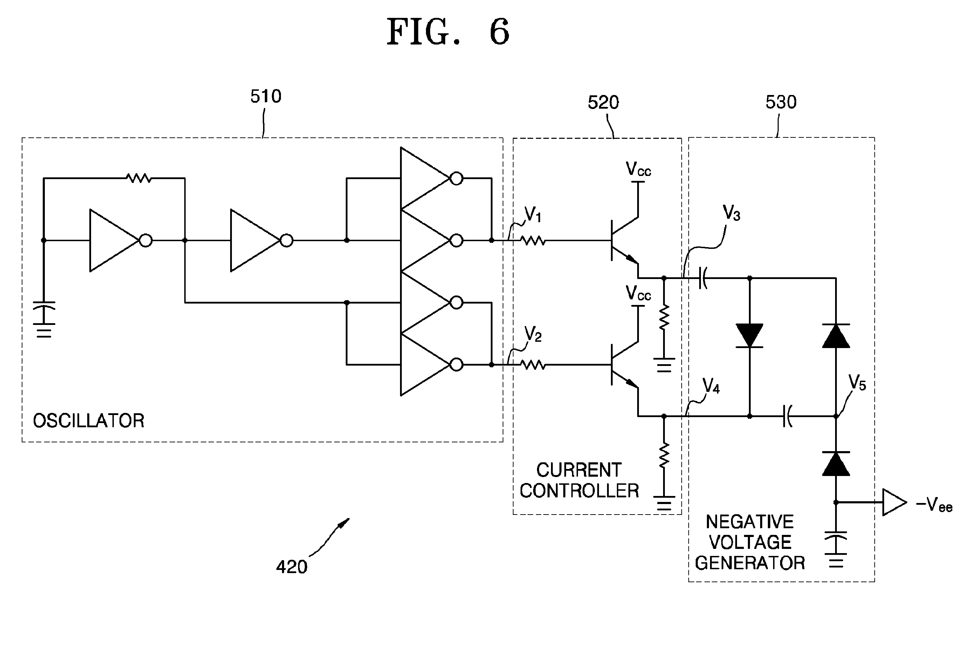

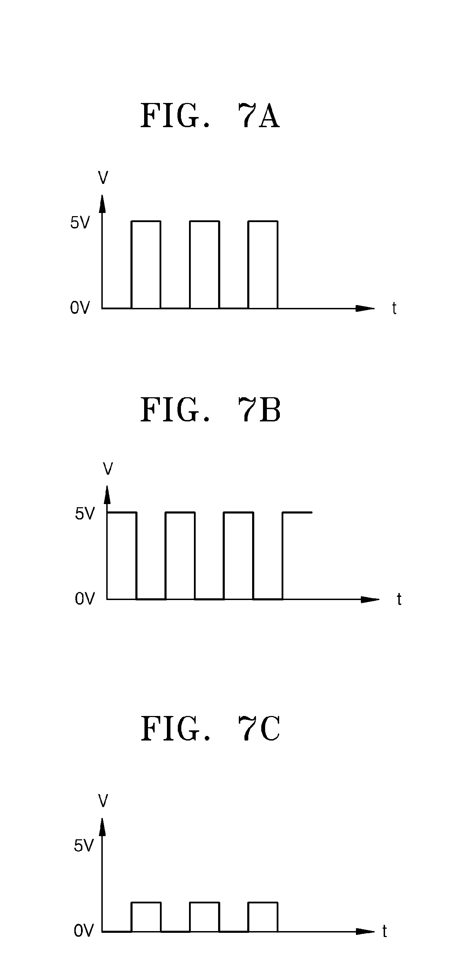

Figures 7A to 7F are waveform diagrams of the operations of elements of Figure 6.

Reference will now be made in detail to embodiments of the present invention, wherein like reference numerals refer to the like elements throughout.

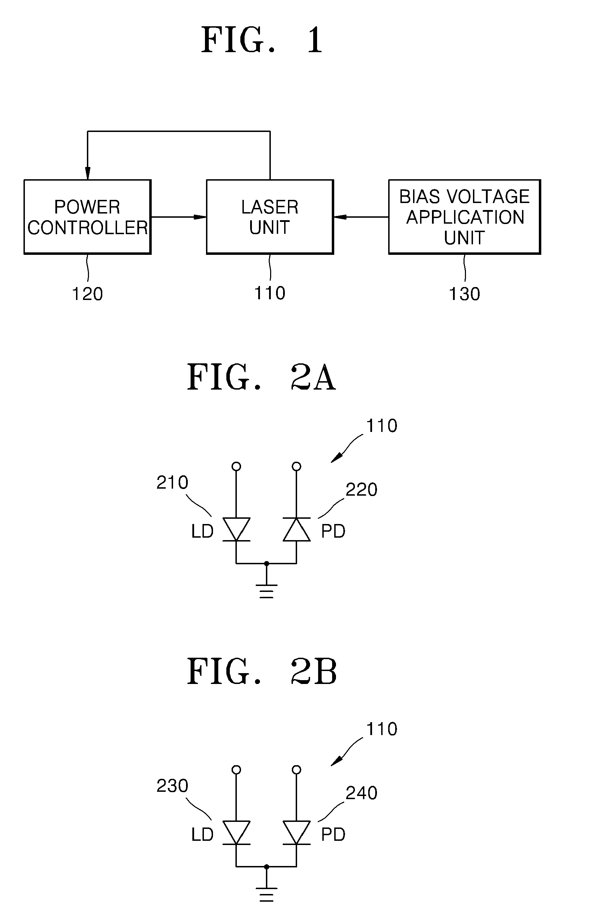

Referring to Figure 1, a laser output control apparatus according to an embodiment of the present invention includes a laser unit 110, a power controller 120, and a bias voltage application unit 130.

The laser unit 110 includes a laser diode (LD) acting as a light-emitting unit and a photo diode (PD) acting as a light-receiving unit. A terminal of the LD and a terminal of the PD are connected to each other. Examples of a connection of the LD and the PD that constitute the laser unit 110 will be described with reference to Figures 2A and 2B.

The laser unit 110 of Figure 2A includes an LD 210 that is forward-biased and a PD 220 that is reverse-biased. The laser unit 110 of Figure 2A has a first connection configuration in which the cathode of the LD 210 and the anode of the PD 220 are connected to each other and grounded. In the first connection configuration, a feedback voltage obtained from the cathode of the PD 220 is applied to the power controller 120 of Figure 1.

The laser unit 110 of Figure 2B includes an LD 230 that is forward-biased and a PD 240 that is reverse-biased. The laser unit 110 of Figure 2B has a second connection configuration in which the cathode of the LD 230 and the cathode of the PD 240 are connected to each other and grounded. In the second configuration, a feedback voltage detected from the anode of the PD 240 is applied to the power controller 120 of Figure 1.

As with Automatic Power Control (APC), the power controller 120 controls the driving current supplied to the LD in accordance with the size of the feedback voltage supplied from the laser unit 110 to maintain the laser beam emitted by the LD at constant power. The feedback voltage is determined in accordance with a monitoring current and a bias voltage. The monitoring current is obtained by converting the laser beam output to the PD from the LD into a current. The bias voltage is used to make the PD reverse-biased. In the case of the laser unit 110 having the first configuration (Figure 2A), the bias voltage is a positive voltage. In the case of the laser unit 110 having the second configuration (Figure 2B), the bias voltage is a negative voltage.

The bias voltage application unit 130 applies a bias voltage making the PD in the laser unit 110 reverse-biased. Whether a positive voltage or a negative voltage is applied to the PD depends on the connection configuration of the LD and the PD of the laser unit 110. When the laser unit 110 has the first connection configuration shown in Figure 2A, a positive voltage is applied to the cathode of the PD. When the laser unit 110 has the second connection configuration of Figure 2B, a negative voltage is applied to the anode of the PD.

Referring to Figure 3, the power controller 120 includes a comparator 310, an automatic power controller 320, a driving unit 330 and an LD 340. The comparator 310 compares an input signal and a feedback voltage *V*_{*f*}, and provides a control signal which indicates the result of the comparison to the automatic power controller 330. The comparator 310 is a NAND gate. When the laser is applied to to a laser scanning unit, the input signal is image data.

The automatic power controller 320 generates a driving signal having a current and a voltage determined by the control signal. The automatic power controller 320 provides the driving signal to the driving unit 330 so as to maintain the power of a laser beam emitted by the LD 340 constant. The automatic power controller 320 is an Application-Specific Integrated Circuit (ASIC) chip, although the controller 320 may take any other form.

The driving unit 330 generates a predetermined driving current in response to the driving signal generated by the automatic power controller 320 and provides the driving current to the LD 340 which is forward-biased. The LD 340 emits a laser beam whose magnitude is proportional to that of the driving current.

Referring to Figure 4, the bias voltage application unit 130 includes a first bias voltage generating unit 410, a second bias voltage generating unit 420, a selector 430, a variable resistor 440, and a PD 450.

When the laser unit 110 of Figure 1 has the first connection configuration shown in Figure 2A, the first bias voltage generating unit 410 generates a first bias voltage *V*_{*cc*} which reverse-biases the PD 450. The first bias voltage *V*_{*cc*} is a positive voltage, e.g., a power supply voltage of +5V that is applied to the laser scanning unit.

When the laser unit 110 has the second connection configuration shown in Figure 2B, the second bias voltage generating unit 420 generates a second bias voltage *-V*_{*ee*} that reverse-biases the PD 450. The second bias voltage *-V*_{*ee*} is a negative voltage, e.g., -5V. Since a negative voltage is not applied to the laser scanning unit from an external source, the negative voltage is generated and applied to the laser scanning unit.

The selector 430 selects and outputs one of the first bias voltage *V*_{*cc*} generated by the first bias voltage generating unit 410 and the second bias voltage *-V*_{*ee*} generated by the second bias voltage generating unit 420. The selector 430 is a switch having an output contact point *T*_{*1*}*,* and first and second input contact points *T*_{*2*} and *T*_{*3*}, however, any other suitable configuration is also envisaged. During manufacturing, the selector 430 is manipulated in advance depending on the connection of the LD and the PD of the laser unit 110. For instance, when the laser unit 110 has the first connection configuration, the selector 430 is installed such that the output contact point *T*_{*1*} contacts the first input contact point *T*_{*2*}. When the laser unit 110 has the second connection configuration, the selector 430 is installed such that the output contact point *T*_{*1*} contacts the second input contact point *T*_{*3*}.

The variable resistor 440 generates a feedback voltage *V*_{*f*} by reducing the first or second bias voltage in accordance with a monitoring current whose magnitude is proportional to that of a light emitted to the PD 450. The feedback voltage is fed to the power controller 120.

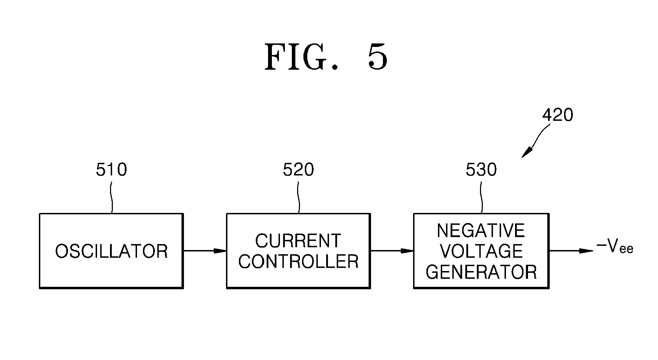

Referring to Figure 5, the second bias voltage generating unit 420 includes an oscillator 510, a current controller 520, and a negative voltage generator 530. The operations of these elements of the second bias voltage generating unit 420 will now be described with reference to Figures 6 and 7A to 7F.

The oscillator 510 oscillates at a predetermined oscillation frequency thus obtaining a first clock signal and a second clock signal having different phases. For instance, the oscillator 510 oscillates using a Schmidt trigger circuit such as that shown in Figure 6 at an oscillation frequency of 22 KHz. This is obtained by adjusting the value of a resistor or a capacitor. Referring to Figure 6, an oscillator 510 generates a first clock signal *V*_{*1*} whose waveform is illustrated in Figure 7A and a second clock signal *V*_{*2*} whose waveform is illustrated in Figure 7B. The phase difference between the first clock signal *V*_{*1*} and the second clock signal *V*_{*2*} is 90 degrees.

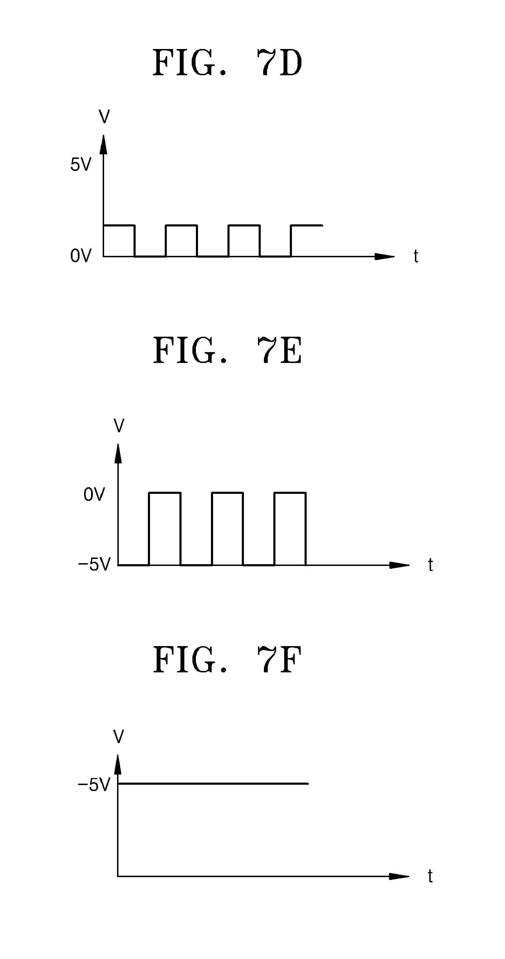

The current controller 520 generates a third clock signal *V*_{*3*} and a fourth clock signal *V*_{*4*} using the first and second clock signals *V*_{*1*} and *V*_{*2*} so as to increase the current capacity for the second bias voltage -Vₑₑ. Referring to Figure 6, a current controller 520 uses two transistors into whose base terminals the first and second clock signals *V*_{*1*} and *V*_{*2*} are fed, respectively. A third clock signal *V*_{*3*} whose waveform is illustrated in Figure 7C and a fourth clock signal *V*_{*4*} whose waveform is illustrated in Figure 7D are output from the emitter terminals, respectively of transistors of the current controller 520. In this case, a transistor that has a comparatively high current gain *h*_{*fe*} and a comparatively low collector-emitter saturated voltage *V*_{*ce(sat)*} with respect to a rated current of the PD 450 used, is preferable.

The negative voltage generator 530 generates a fifth clock signal *V*_{*5*} with a negative double voltage using the third and fourth clock signals *V*_{*3*} and *V*_{*4*} and generates the second bias voltage *-V*_{*ee*} using the fifth clock signal *V*_{*5*}. The waveform of the fifth clock signal *V*_{*5*} is illustrated in Figure 7E, and the waveform of the second bias voltage *-V*_{*ee*} is illustrated in Figure 7F. The fifth clock signal *V*_{*5*} is obtained using a charge pumping circuit such as that shown in Figure 6. The second bias voltage *-V*_{*ee*} is obtained by rectifying the fifth clock signal *V*_{*5*} generated by the charge pumping circuit using a diode and a capacitor shown in Figure 6.

The present invention is not limited by the structure of the second bias voltage generator 420 shown in Figures 5 and 6. A negative voltage required by the present invention can be generated using numerous circuits. In this disclosure, the second bias voltage *-V*_{*ee*} of -5V is used for convenience although this can be generated using an external negative voltage.

A laser output control apparatus according to the present invention may be installed in a laser scanning unit applicable to office appliance, such as a laser printer, a laser facsimile, or a multi-functional peripherals, that requires high-speed on/off switching.

As described above, in a laser output control apparatus according to the present invention, a different bias voltage is selectively applied to a photo diode according to a connection structure in which a laser diode and the photo diode of a semiconductor laser device are connected to each other. Accordingly, it is possible to use a semiconductor laser device in office appliance regardless of a connection structure of the semiconductor laser, thereby allowing versatility of machine parts and reducing manufacture costs.

## Claims

1. A laser apparatus comprising a laser diode (210, 230), a photo diode (220, 240) and bias means (410, 420) **characterised in that** the bias means (410, 420) is operable to bias the photo diode (220, 240) in dependence on the configuration of the laser diode (210, 230) and the photo diode (220, 240).

2. A laser apparatus according to claim 1 wherein the bias means (410, 420) comprises a first and second bias means (410, 420) to selectively either forward or reverse-bias the photo diode (220, 240).

3. A laser apparatus according to either one of claims 1 or 2 wherein the bias means (410, 420) is configured to reverse-bias the photo diode (220, 240).

4. A laser output control apparatus comprising:
a laser unit including a laser diode and a photo diode having at least one connection structure therebetween; and
a bias voltage application unit selectively applying a bias voltage to the photo diode according to the connection structure so that the photo diode is biased in a reverse direction.

5. The laser output control apparatus according to claim 4, further comprising a power controller maintaining power of a laser beam emitted by the laser diode constant in accordance with a feedback voltage applied from the photo diode.

6. The laser output control apparatus of claim 4 or 5, wherein the laser unit is constructed according to one of a first connection structure in which a cathode of the laser diode and an anode of the photo diode are commonly connected, and a second connection structure in which the cathode of the laser diode and a cathode of the photo diode are commonly connected.

7. The laser output control apparatus of claim 6, wherein the bias voltage application unit comprises:
a first bias voltage generating unit generating a first bias voltage that makes the photo diode, which is connected to the laser diode according to the first connection structure, biased in a reverse direction;
a second bias voltage generating unit generating a second bias voltage that makes the photo diode, which is connected to the laser diode according to the second connection structure, biased in the reverse direction; and
a selector selecting one of the first and second bias voltages according to the connection structure of the laser diode and the photo diode.

8. The laser output control apparatus of claim 5, wherein the bias voltage application unit further comprises a variable resistor generating the feedback voltage by dropping one of the first and second bias voltages selected by the selector in accordance with a monitoring current flowing through the photo diode.

9. The laser output control apparatus of claim 7, wherein the second bias voltage generating unit comprises:
an oscillator oscillating at a predetermined frequency to obtain a first clock signal and a second clock signal with different phases;
a current controller generating a third clock signal and a fourth clock signal using the first and second clock signals so as to increase the current capacity for the second bias voltage; and
a negative voltage generator generating a fifth clock signal with a negative double voltage using the third and fourth clock signals, and generating the second bias voltage using the fifth clock signal.

10. The laser output control apparatus of any one of claims 4 through 9, which is installed in a laser scanning unit.

11. A laser output control apparatus comprising:
a laser unit including a laser diode and a photo diode having at least one connection structure therebetween;
a bias voltage generator generating at least one bias voltage that makes the photo diode biased in a reverse direction; and
a selector selecting a bias voltage, which is to be applied to the photo diode, from at least one bias voltage according to the at least one connection structure.

12. The laser output control apparatus of claim 11, further comprising a power controller maintaining power of a laser beam emitted by the laser diode constant in accordance with a feedback voltage applied from the photo diode.

13. The laser output control apparatus of claim 11 or 12, wherein the laser unit is constructed according to one of a first connection structure in which a cathode of the laser diode and an anode of the photo diode are commonly connected, and a second connection structure in which the cathode of the laser diode and a cathode of the photo diode are commonly connected.

14. The laser output control apparatus of any one of claims 11 through 13, which is installed in a laser scanning unit.

15. A laser output control apparatus comprising:
a laser unit constructed according to one of a first connection structure in which a cathode of a laser diode and an anode of a photo diode are commonly connected, and a second connection structure in which the cathode of the laser diode and a cathode of the photo diode are commonly connected;
a bias voltage generator generating a first bias voltage and a second bias voltage; and
a selector selectively applying one of the first and second bias voltage to the photo diode according to one of the first and second connection structures to make the photo diode biased in a reverse direction.

16. The laser output control apparatus of claim 15, further comprising a power controller maintaining power of a laser beam emitted by the laser diode constant in accordance with a feedback voltage applied from the photo diode.

17. The laser output control apparatus of claim 15 or 16, which is installed in a laser scanning unit.

18. A method for controlling a laser beam emitted by a laser control apparatus, comprising:
providing a laser diode and a photo diode having first and second connection structures therebetween;
generating a first bias voltage and a second bias voltage; and
selectively applying one of the first and second bias voltages to the photo diode according to one of the first and second connection structures to make the photo diode biased in the reverse direction.

19. The method of claim 18, further comprising maintaining power of the laser beam constant in accordance with a feedback voltage applied from the photo diode.
